# EUROPÄISCHE PATENTSCHRIFT

(11) **EP 2 790 961 B1**
(45) Veröffentlichungstag und Bekanntmachung des Hinweises auf die Patenterteilung: **19.09.2018**
(21) Anmeldenummer: 12797848.4
(22) Anmeldetag: 29.11.2012
(51) Int. Cl.: B60N 2/42

(54) **VORRICHTUNG ZUR GEZIELTEN KONTROLLE UND REDUZIERUNG DER RÜCKVERLAGERUNG EINES FAHRZEUGSITZES BEI EINEM HECKAUFPRALL**
DEVICE FOR TAILOR MADE ADAPTING AND REDUCTION OF THE REAR DISPLACEMENT OF A VEHICLE SEAT IN CASE OF A REAR IMPACT
DISPOSITIF POUR ADAPTER ET RÉDUIRE LE DÉPLACEMENT EN ARRIÈRE D'UN SIÈGE DE VÉHICULE EN CAS DE CHOC ARRIÈRE

(30) Priorität: 16.12.2011 DE 102011056572; 16.05.2012 DE 102012104277
(43) Veröffentlichungstag der Anmeldung: 22.10.2014
(73) Patentinhaber: Adient Luxembourg Holding S.à r.l., 1855 Luxembourg (LU)
(72) Erfinder: ECKHOFF, Sascha, 42799 Leichlingen (DE); KAESTNER, Thomas, 42699 Solingen (DE)
(74) Vertreter: Loock, Jan Pieter
(86) Internationale Anmeldenummer: PCT/EP2012/073934
(87) Internationale Veröffentlichungsnummer: WO 2013/087415

(56) Entgegenhaltungen:
- EP-A2- 2 279 899
- DE-A1-102007 039 862
- DE-U1-202007 009 795
- FR-A1- 2 920 358
- JP-A- 2007 320 385
- JP-A- 2009 208 737
- US-B1- 6 176 543
- US-B1- 6 276 650

## Beschreibung

Die Erfindung betrifft eine Vorrichtung zur gezielten Kontrolle und Reduzierung einer Rückverlagerung eines Fahrzeugsitzes bei einem Unfall, mit
- mindestens einem an einem Sitzschienenpaar angeordneten Anschlagelement, das
   eine Anschlagfläche aufweist, die gegenüber einer Längsachse des Sitzschienenpaars geneigt ist, und
- mindestens einem an dem Fahrzeugsitz angeordnetem Anschlagkörper, mit einer in einer Normallage im Abstand von der Anschlagfläche angeordneten Kontaktfläche,
wobei das Anschlagelement und der Anschlagkörper derart ausgebildet und im montierten Zustand zueinander angeordnet sind, dass in einer bei einem Heckaufprall auf ein den Fahrzeugsitz aufweisendes Kraftfahrzeug auftretenden Crashlage die Anschlagfläche des Anschlagelementes und die Kontaktfläche des Anschlagkörpers in Kontakt kommen und dadurch die unfallbedingte Rückverlagerung des Fahrzeugsitzes zumindest vermindert wird.

Bei Verkehrsunfällen, insbesondere bei Heckauffahrunfällen von Kraftfahrzeugen, besteht die Gefahr, dass der Fahrzeugsitz aufgrund der auftretenden Kräfte eine rückwärtige Abwärtsbewegung, d.h. in Richtung des Fahrzeughecks und - bodens, bezogen auf die Einbaulage des Fahrzeugsitzes in einem Fahrzeug, durchführt. Hierdurch ist eine besondere Gefährdung der im Fahrzeug befindlichen Personen gegeben. Zum einen besteht die Gefahr, dass der Fahrzeugsitz sich zumindest teilweise vom Sitzschienensystem löst oder dieses sich verformt, wodurch die dadurch verursachten, unkontrollierte Bewegungen des Fahrzeugsitzes die auf dem Fahrzeugsitz angeordnete sowie weitere im Fahrzeug befindlichen Personen gefährden. Darüber hinaus erfolgt eine Verlagerung der auf dem Fahrzeugsitz angeordneten Person, so dass die Sicherheitssysteme wie Airbag und Sicherheitsgurt nicht mehr optimal ihre Funktion erfüllen können.

Aus dem Stand der Technik sind einige Vorrichtungen bekannt, die eine Stabilisierung eines Fahrzeugsitzes auf einem Sitzschienenpaar bewirken und eine Rückverlagerung des Fahrzeugsitzes im Crashfall verhindern sollen. Alle bekannten Vorrichtungen basieren auf unterschiedlichen, jeweils hochkomplexen Mechanismen mit mehreren beweglichen Bauteilen, wobei typischerweise durch mechanische oder elektronische Signale ein Bewegungsablauf dieser Bauteile ausgelöst wird, der zu einer Verrastung oder Befestigung des Fahrzeugsitzes an der Fahrzeugstruktur oder einem den Sitz tragendem Sitzschienenpaar führt.

Ein essentieller Nachteil dieser Vorrichtungen liegt in der Notwendigkeit der Auslösung dieser Mechanismen durch externe Signale, der Komplexität der Mechanismen und der beweglichen Bauteile der Sperrmechanismen, da deren Bewegung zum einen zu einer gewissen Zeitverzögerung der Verriegelung des Fahrzeugsitzes nach einem den Mechanismus auslösenden Unfall führt und zum anderen mit zunehmender Komplexität der Mechanismen die Fehleranfälligkeit steigt und entsprechend die Zuverlässigkeit abnimmt.

Der nächstliegende Stand der Technik stellt eine aus der Druckschrift US 6 276 650 B1 bekannte Vorrichtung dar, mit einem an einem Sitzschienenpaar angeordneten Anschlagelement, das eine Anschlagfläche aufweist und einem an dem Fahrzeugsitz angeordnetem Anschlagkörper, mit einer in einer Normallage im Abstand von der Anschlagfläche angeordneten Kontaktfläche, welche bei einem Heckaufprall auf ein den Fahrzeugsitz aufweisendes Kraftfahrzeug in einer dabei auftretenden Crashlage in Kontakt miteinander kommen.

Der Erfindung liegt die Aufgabe zugrunde, eine Vorrichtung bereit zu stellen, die in einfacher Weise eine Rückverlagerungsbewegung eines Kraftfahrzeugsitzes bei einem Unfall eines Kraftfahrzeugs effizient und ohne Einsatz aktiver, beweglicher Bauteile vermindert.

Die Aufgabe wird erfindungsgemäß durch eine Vorrichtung nach Anspruch 1 gelöst. Vorteilhafte Weiterbildungen der Erfindung sind in den abhängigen Ansprüchen angegeben.

Dabei bewirkt die erfindungsgemäße Vorrichtung im Crashfall eine vorteilhafte Begrenzung des möglichen Bewegungsweges des Fahrzeugsitzes, wodurch ein Kollabieren des Sitzes bei einem Kraftfahrzeugunfall verhindert wird. Zusätzlich wird hierdurch gewährleistet, dass eine auf dem Fahrzeugsitz befindliche Person in einer Position verbleibt, in der das Verletzungsrisiko der Person bei einem Kraftfahrzeugunfall deutlich vermindert ist. Insbesondere wird durch die erfindungsgemäße Vorrichtung aber sichergestellt, dass die Person relativ zu den Sicherungssystemen des Kraftfahrzeugs, wie Gurt oder Airbag, in einer Position verbleibt, in der diese ihre Funktion unbeeinträchtigt erfüllen können. Darüber hinaus ermöglicht die zusätzliche Abstützung zwischen der Anschlagfläche des Anschlagelementes und der Kontaktfläche des Anschlagkörpers eine weitere Verbesserung der Übertragung der im Crashfall auftretenden Kräfte von dem Fahrzeugsitz auf die Fahrzeugstruktur, was zu einer Reduzierung der Belastung der übrigen Bauteile der Sitzbefestigung führt.

Das Anschlagelement und/oder der Anschlagkörper können grundsätzlich aus einem beliebigen Material bestehen, bevorzugt sind diese aber aus dem gleichen Material wie das Sitzschienenpaar oder aus einem Material der Sitzstruktur gebildet.

Wenigstens eine Seite des Anschlagelementes ist als Anschlagfläche ausgebildet, die in einer bei einem Unfall auftretenden Crashlage in Kontakt mit wenigstens einer Seite des Anschlagkörpers, die als Kontaktfläche bezeichnet wird, kommt. Die Anschlagfläche des Anschlagelementes sowie die Kontaktfläche des Anschlagkörpers sind im regulären Betrieb berührungsfrei in einem Abstand voneinander in einer Normallage angeordnet. Nur eine unfallbedingte Krafteinwirkung auf den Fahrzeugsitz führt zu einem Übergang aus der Normallage in die Crashlage.

Dabei ist die erfindungsgemäße Vorrichtung zur gezielten Kontrolle und Reduzierung einer Rückverlagerung eines Fahrzeugsitzes bei einem Unfall mindestens an einem Sitzschienenpaar des Fahrzeugsitzes angebracht. Auch eine Anordnung an beiden Sitzschienenpaaren des Fahrzeugsitzes ist möglich, was zu einer besseren Stabilisierung des Fahrzeugsitzes bei einem Heckaufprallunfall führt und eine verbesserte Übertragung unfallbedingter Kräfte vom Fahrzeugsitz auf die Fahrzeugstruktur gewährleistet.

Grundsätzlich können die Anschlagfläche und/oder die Kontaktfläche in beliebiger Form ausgebildet sein. Bevorzugt sind die Anschlagfläche und/oder die Kontaktfläche jedoch eben ausgebildet.

Bevorzugt ist die Form der Kontaktfläche korrespondierend zu der Form der Anschlagfläche ausgestaltet, so dass bei einem Übergang des Fahrzeugsitzes in die Crashlage bei einem Heckaufprall auf das Kraftfahrzeug die Anschlagfläche des Anschlagelementes und die Kontaktfläche des Anschlagkörpers möglichst vollflächig in Kontakt kommen. Durch den großflächigen und gleichmäßigen Oberflächenkontakt zwischen der Anschlagfläche und der Kontaktfläche, selbst bei einer gewissen, unfallbedingten Verschiebung beider Bauteile relativ zueinander in Längsrichtung der Sitzschienen, ist gewährleistet, dass eine gleichmäßige Übertragung der unfallbedingten Kräfte vom Fahrzeugsitz auf das Anschlagelement erfolgt und die Rückverlagerung des Sitzes gezielt abgefangen werden kann.

Auch die Oberflächenstruktur der Anschlagfläche kann grundsätzlich in beliebiger Weise ausgestaltet werden. Bevorzugt besitzt die Anschlagfläche allerdings eine raue Oberflächenstruktur, die in vorteilhafter Weise die Haftreibung beider Bauteile beim Aufeinandertreffen im Crashfall vergrößert.

Ferner kann die Anschlagfläche gegenüber der Längsachse des Sitzschienenpaares um 15° bis 55°, bevorzugt um 25° bis 45°, besonders bevorzugt um 35° geneigt. Dabei verläuft die Steigung der Anschlagfläche gegenüber der Einbaulage der Sitzschienen eines Fahrzeugsitzes in einem Fahrzeug bezogen auf die Fahrtrichtung abfallend, wodurch in einfacher Weise gewährleistet ist, dass die bei einer unfallbedingten Rückverlagerung des Fahrzeugsitzes von der Kontaktfläche auf die Anschlagfläche übertragene Kräfte effizient und kontrolliert aufgenommen werden und ein Abrutschen beider Flächen voneinander zuverlässig verhindert wird.

Die Kontaktfläche und die Anschlagfläche sind bevorzugt in der Normallage parallel und in geringem Abstand zueinander angeordnet, wodurch im Crashfall schnellstmöglich ein weitestgehend vollflächiger Kontakt gewährleistet ist.

Nach einer vorteilhaften Ausgestaltung der Erfindung ist vorgesehen, dass der Anschlagkörper einstückig mit einem Bauteil eines Fahrzeugsitzgestells des Fahrzeugsitzes, bevorzugt einstückig durch Umbördelung einer Sitzschwinge des Fahrzeugsitzes gebildet ist. Hierdurch wird zum einen in vorteilhafter Weise sichergestellt, dass der Anschlagkörper unlösbar mit dem Bauteil des Fahrzeugsitzgestells verbunden ist, zum anderen ist hierdurch eine kostengünstige und einfache Herstellung und Montage des Anschlagkörpers möglich. Darüber hinaus ist denkbar, dass das Anschlagelement mit dem Sitzschienenpaar und/oder der Anschlagkörper mit einem Bauteil des Fahrzeugsitzes, etwa einer Sitzschwinge oder dem Sitzgestell, form- und/oder stoffschlüssig verbunden sind. Alternativ können auch bekannte Befestigungsmittel, wie etwa Schrauben, Bolzen, Nieten oder Stifte eingesetzt werden.

Gemäß einer weiteren, vorteilhaften Weiterbildung der Erfindung ist vorgesehen, dass das Anschlagelement ein weiteres Halteelement aufweist. Dieses Halteelement kann dabei ebenfalls zur Stabilisierung des Sitzes im Crashfall dienen oder ein weiteres Bauelement des Fahrzeugs bzw. des Sitzes tragen, wie zum Beispiel Teile des Sicherheitsgurtsystems, einer Armstütze oder eine beliebige andere Halterung.

Nach der Erfindung ist vorgesehen, dass der Anschlagkörper im Bereich der Kontaktfläche eine lochartige Aussparung und das Anschlagelement einen aus der Anschlagfläche hervorstehenden Zapfen aufweisen, die derart ausgebildet und angeordnet sind, dass der aus der Anschlagfläche hervorstehenden Zapfen in der Crashlage mit der lochartigen Aussparung des Anschlagkörpers im Bereich der Kontaktfläche in Eingriff gelangt, wodurch die Rückverlagerung des Fahrzeugsitzes besonders wirkungsvoll verhindert oder zumindest vermindert wird. Durch den Eingriff des Zapfens in die lochartige Aussparung wird in einfacher Weise äußerst effektiv verhindert, dass bei einem Unfall die Kontaktfläche und die Anschlagfläche aneinander abgleiten, was insbesondere bei schweren Unfällen vorteilhaft ist, bei denen es zu einer starken Deformation oder sogar zu einem Abreißen des Fahrzeugsitzes vom Sitzschienenpaar kommen kann.

Dabei wird durch eine mechanische Wechselwirkung zwischen dem Anschlagkörper und dem Anschlagelement mittels eines Eingriffs des Zapfens in die lochartigen Aussparung bei einem Heckaufprall auf das Kraftfahrzeug zusätzlich ein seitliches Verrutschen des Fahrzeugsitzes über das Sitzschienenpaar hinweg unterbunden. Dabei wird eine seitliche Stabilisierung des Fahrzeugsitzes orthogonal zur Verlaufsrichtung des Sitzschienenpaares erreicht, wodurch eine besonders kontrollierte Übertragung der unfallbedingten Kräfte von dem Fahrzeugsitz auf die übrige Fahrzeugstruktur gewährleistet ist.

Nach der Erfindung weist das Anschlagelement eine Deformationszone in Form einer Aussparung auf, die nach Übergang aus der Normallage in die Crashlage eine darauf folgende Deformation des Anschlagelementes bewirkt und somit durch gezieltes Energiemanagement zu einer Verringerung der auf den Fahrzeugsitz wirkenden Beschleunigungskräfte führt, wodurch das Verletzungsrisiko eines Passagiers auf dem Fahrzeugsitz erheblich verringert wird.

Dabei durchdringt die Aussparung mehr als die halbe Länge des Anschlagelements in paralleler Richtung zur Verstellrichtung des Sitzschienenpaars. Die Querschnittsfläche der Aussparung, orthogonal zur Verstellrichtung des Sitzschienenpaares, kann grundsätzlich eine beliebige Form aufweisen, nach einer vorteilhaften Weiterbildung der Erfindung ist sie jedoch rautenförmig ausgebildet.

Nachstehend wird ein Ausführungsbeispiel mit Bezug auf die Zeichnungen näher erläutert. In den Figuren zeigen:
- Fig. 1: eine perspektivische Teilansicht eines Anschlagelementes an einem Sitzschienenpaar und eines Anschlagkörpers an einer zu einem Fahrzeugsitz gehörenden Sitzschwinge;
- Fig. 2: eine weitere perspektivische Teilansicht eines montierten Anschlagkörpers und Anschlagelements;
- Fig. 3: einen schematischen Querschnitt durch eine Ausführungsform einer Sitzschwinge mit einem Anschlagkörper und einem Anschlagelement;
- Fig. 4: einen schematischen Querschnitt durch die Ausführungsform eines Anschlagkörpers mit Ausnehmung und eines Anschlagelements mit Zapfen und Deformationszone.

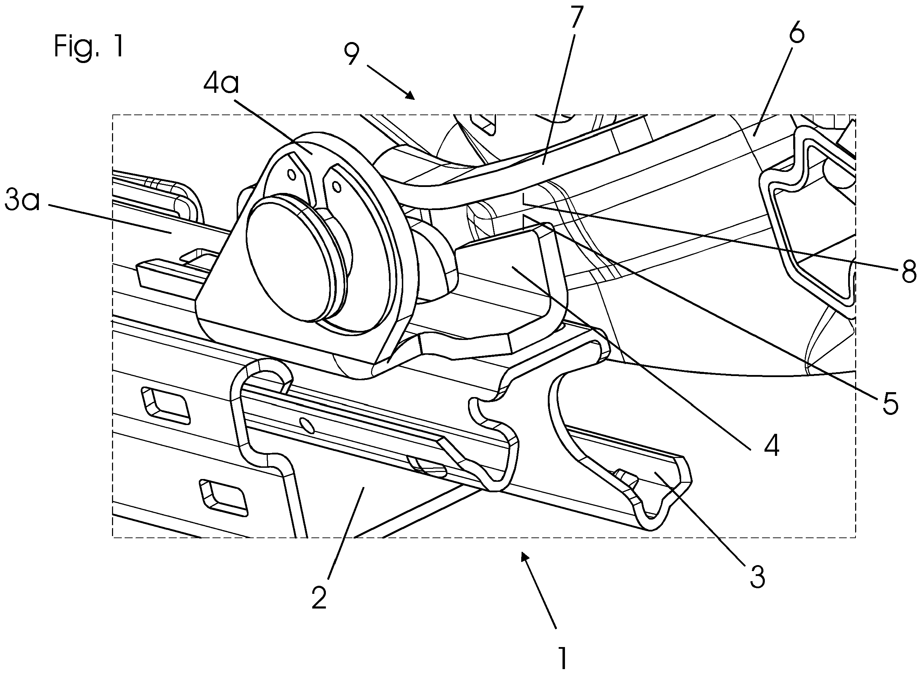

Eine in Fig. 1 dargestellte Vorrichtung zur gezielten Kontrolle und Reduzierung einer Rückverlagerung eines Fahrzeugsitzes bei einem Unfall weist ein auf einer Oberseite 3a einer Sitzoberschiene 3 des Fahrzeugsitzes angeordnetes Anschlagelement 4 sowie einen korrespondierenden, an einer Sitzschwinge 6 des Fahrzeugsitzes angeformten Anschlagkörper 7 auf.

Der Fahrzeugsitz ist hierbei an einem Sitzschienenpaar 1 angebracht, welches aus einer mit der Fahrzeugstruktur fest verbunden Sitzunterschiene 2 und der an der Sitzunterschiene 2 verschiebbar angeordneten Sitzoberschiene 3, die den Fahrzeugsitz trägt, besteht.

Das metallische Anschlagelement 4 ist mit der Oberseite 3a der Sitzoberschiene 3 fest verschraubt, wobei es als multifunktionaler Körper mit einem weiteren Halteelement 4a zur Befestigung eines Bauteils eines Sicherheitsgurtsystems des Fahrzeugsitzes ausgebildet ist.

Das Anschlagelement 4 weist eine ebene Anschlagfläche 5 mit glatter Oberflächenstruktur auf und ist in einem Winkel von 35 ° relativ zur Oberfläche 3a der Sitzoberschiene 3 angeordnet. Der Anschlagkörper 7 ist einstückig aus einer Sitzschwinge 6 des Fahrzeugsitzgestell 9 als Umbördelung ausgebildet und weist an der Unterseite der Umbördelung eine ebene Kontaktfläche 8 auf.

Die Kontaktfläche 8 des Anschlagkörpers 7 ist korrespondierend zu der Anschlagfläche 5 des Anschlagelements 4 ausgebildet, wobei die Kontaktfläche 8, wie in Figur 1 dargestellt, entsprechend dem Winkel der Anschlagfläche 5 ebenfalls in einem Winkel von 35° zur Sitzoberschiene 3 geneigt ist. Die Kontaktfläche 8 und die Anschlagfläche 5 berühren sich bei einer unfallbedingten Absenkung und/oder Rückverlagerung des Fahrzeugsitzes somit vollflächig.

Dagegen berühren sich die Kontaktfläche 8 und die Anschlagfläche 5 im montierten, betriebsbereiten Zustand, der Normallage, nicht. Bei einem Verkehrsunfall, insbesondere bei einem Heckaufprall, wird die Sitzschwinge 6 mit dem Fahrzeugsitz in Richtung des Fahrzeughecks und zeitgleich Richtung Fahrzeugboden beschleunigt. Die Kontaktfläche 8 kommt dabei mit der Anschlagfläche 5 in Berührung, wobei dieser Zustand als Crashlage definiert ist. Dabei findet zwischen der Kontaktfläche 8 und der Anschlagfläche 5 eine Kraftübertragung vom Fahrzeugsitz auf die Fahrzeugstruktur statt, wobei der maximal mögliche Bewegungsweg des Fahrzeugsitzes aufgrund unfallbedingter Kräfte verkürzt und somit die Übertragung von Bewegungsenergie auf den Fahrzeugsitz vermindert wird.

Durch die winkelige Anordnung der Anschlagfläche 5 am Anschlagelement 4 und der Kontaktfläche 8 am Anschlagkörper 7 ist gewährleistet, dass der Sitz im Crashfall eine weitestgehend kontrollierte Bewegung ausführt, die im wesentlichen auf eine geringfügige Abwärts- und Rückwärtsbewegung, bezogen auf die Einbaulage des Fahrzeugsitzes im Fahrzeug, begrenzt ist, wodurch eine auf dem Fahrzeugsitz befindliche Person derart positioniert bleibt, dass im Fahrzeug vorhandene Sicherheitseinrichtungen wie zum Beispiel ein Sicherheitsgurt oder Airbags ihre Funktion erfüllen können.

Zusätzlich ist das Anschlagelement 4 derart ausgebildet und angeordnet, dass es eine seitliche Bewegung des Fahrzeugsitzes in Bezug auf die Einbaulage des Fahrzeugsitzes im Fahrzeug verhindert und somit einen kontrollierten Kraftabbau und eine gezielte Führung des Fahrzeugsitzes im Crashfall unterstützt.

Eine weitere Vorrichtung zur gezielten Kontrolle und Reduzierung einer Rückverlagerung eines Fahrzeugsitzes bei einem Unfall weist ein auf einer Sitzoberschiene 13 angeschweißtes Anschlagelement 14 sowie einen an einer Sitzschwinge 16 als Bördelung ausgebildeten Anschlagkörper 17 mit einer Kontaktfläche 18 auf.

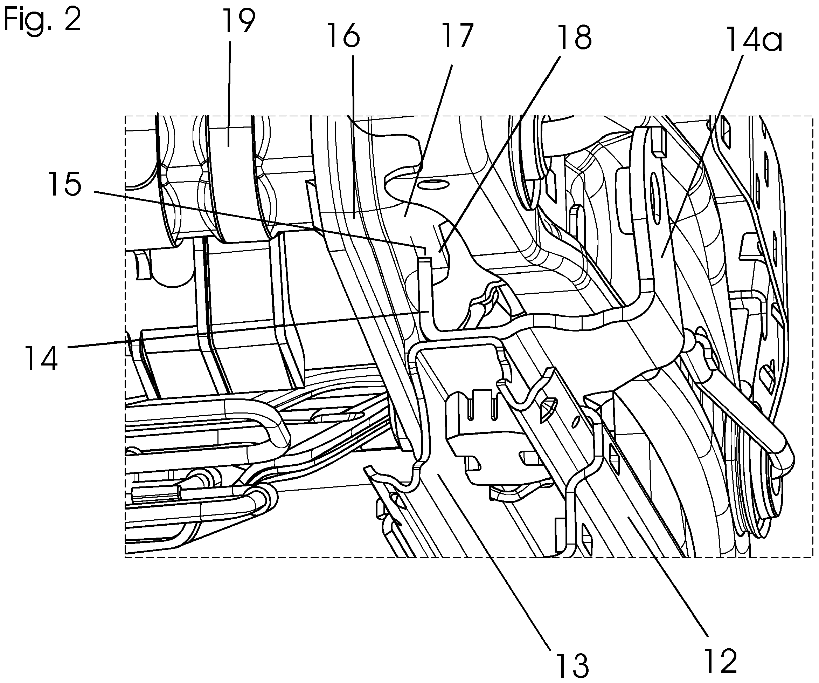

Die Kontaktfläche 18 ist, wie in einer perspektivischen Ansicht in Figur 2 dargestellt, derart ausgebildet und angeordnet, dass sie im Falle eines Heckaufpralls auf das Kraftfahrzeug in dem die Vorrichtung an einem Fahrzeugsitz verbaut ist mit einer an dem Anschlagelement 14 angeordneten Anschlagfläche 15 mit rauer Oberflächenstruktur in Kontakt kommt. Der Kontakt zwischen der Kontaktfläche 18 und der Anschlagfläche 15 verhindert bzw. vermindert die Rückwärts- und die Abwärtsbewegung des Fahrzeugsitzgestells 19 bezogen auf die Einbaulage des Fahrzeugsitzes im Fahrzeug und ermöglicht eine weitere Kraftübertragung zwischen dem Fahrzeugsitz und der Sitzschiene in das System, was zu einer Reduzierung der Belastung auf die übrigen Verbindungsmittel zu Befestigung des Fahrzeugsitzes führt.

Die Anschlagfläche 15 ist dabei näherungsweise parallel zur Sitzoberschiene 13 ausgebildet, so dass im Falle eines Heckaufprallunfalls zunächst die Abwärtsbewegung des Fahrzeugsitzes in Richtung des Fahrzeugbodens verhindert wird und eine Rückverlagerungsbewegung des Fahrzeugsitzes dann durch die Haftreibung zwischen Anschlagfläche 15 und Kontaktfläche 18 verhindert wird.

Darüber hinaus ist das Anschlagelement 14 derart geformt, dass zumindest in der Crashlage, bei der sich die Kontaktfläche 18 und die Anschlagfläche 15 in Kontakt befinden, ein Teil des Sitzgestells 19 zwischen der erhöhten Seite des Anschlagelements 14, an dem sich die Anschlagfläche 15 befindet, und einem weiteren Halteelement 14a, das Teil des Anschlagelements 14 ist, eingebettet ist und von diesem beidseitig umgeben wird, wodurch eine seitliche Bewegung, bezogen auf die Einbaulage des Fahrzeugsitzes, verhindert wird.

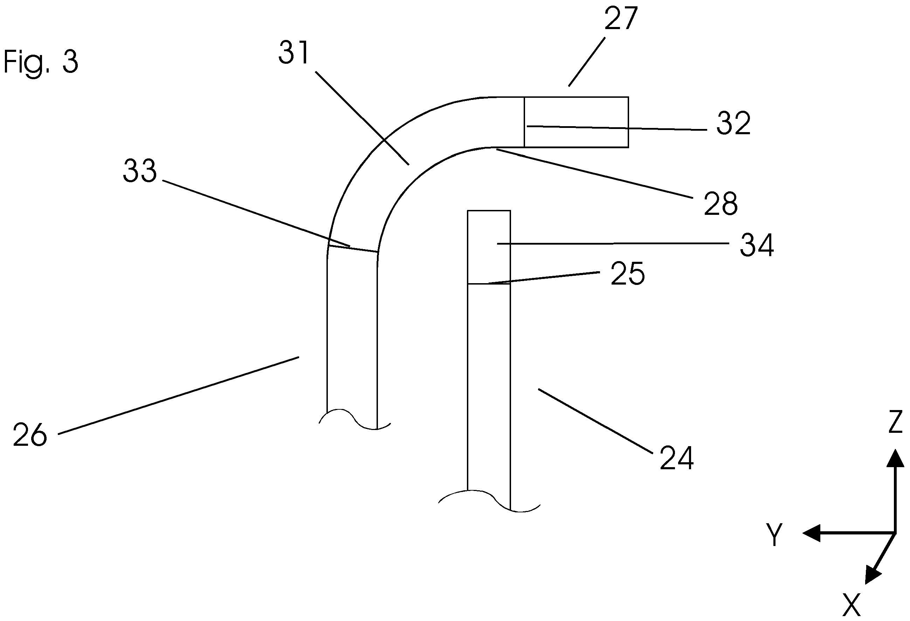

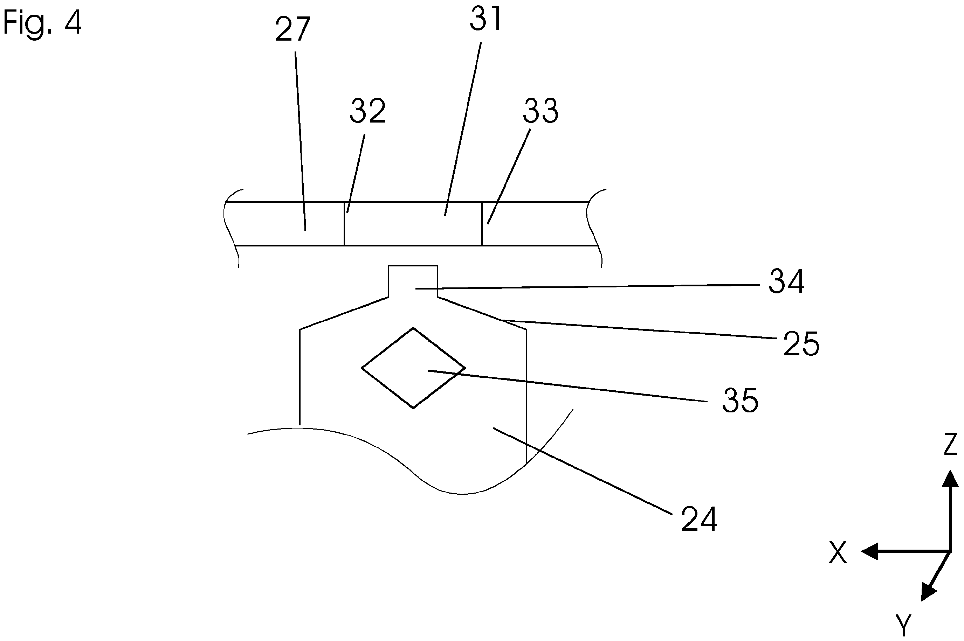

In einem Ausführungsbeispiel ist ein Anschlagkörper 27 als Umbördelung einer Sitzschwinge 26 eines Fahrzeugsitzes ausgebildet, wobei die Sitzschwinge 26 eine langlochartige Aussparung 31 aufweist. Zwei Querschnitte durch einen entsprechenden Anschlagkörper 27 und ein korrespondierendes Anschlagelement 24 sind in den Figuren 3 und 4 dargestellt, wobei die Figur 4 eine gegenüber der Ansicht der Figur 3 um 90° gedrehte Ansicht der Bauelemente zeigt.

Das Anschlagelement 24 besitzt eine Anschlagfläche in dessen Mitte es einen hervorstehenden Zapfen 34 aufweist. Dabei ist die Anschlagfläche 25 jeweils von dem aus ihr hervorstehenden Zapfen 34 zu den äußeren Rändern der Anschlagfläche 25 hin abfallend ausgestaltet.

Im Falle eines Heckaufpralls geht ein in den Fig. 3, 4 nicht dargestellter Fahrzeugsitz aus der Normallage in die Crashlage über, wobei die mit dem Fahrzeugsitz in Verbindung stehende Sitzschwinge 26 durch die unfallbedingten, auf den Fahrzeugsitz wirkenden Kräfte sich in Richtung des Fahrzeughecks und -bodens bewegt. Hierbei kommen der Zapfen 34 des Anschlagelements 24 mit der lochartigen Aussparung 31 in der Sitzschwinge 26 in Eingriff, so dass effektiv eine Bewegung des Fahrzeugsitzes in Richtung auf das Fahrzeugheck oder in eine seitliche Richtung, bezogen auf die Einbaulage des Fahrzeugsitzes, durch den Kontakt des Zapfens 34 mit einer der seitlichen Kanten 32, 33 der lochartigen Aussparung 31 verhindert wird.

Beim Übergang des Fahrzeugsitzes von der Normallage in die Crashlage kommt zusätzlich zum Eingriff des Zapfens 34 in die lochartige Aussparung 31 noch eine Kontaktfläche 28 am Anschlagkörper 27 in Kontakt mit der Anschlagfläche 25 des Anschlagelements 24, wodurch auch eine Bewegung der Fahrzeugsitze in Richtung des Fahrzeugbodens verhindert wird.

Aufgrund des Kontaktes der beiden Flächen 25, 28 sowie des Eingriffes des Zapfens 34 in die lochartige Aussparung 31 wird eine Rückverlagerung des Fahrzeugsitzes nahezu vollständig unterbunden und eine besonders effiziente Kraftübertragung vom Anschlagkörper 27 auf das Anschlagelement 24 gewährleistet.

Darüber hinaus weist das Anschlagelement 24 ein Deformationselement in Form einer Aussparung 35 auf, die einen rautenförmigen Querschnitt hat und das Anschlagelement 24 vollständig durchdringt.

Die Form der Aussparung 35 ist dabei derart ausgebildet, dass bei einem Unfall eine kontrollierte Deformation des Anschlagelementes 24 erfolgt, wodurch die auf den Fahrzeugsitz auftretenden Beschleunigungskräfte als Teil eines gezielten Energiemanagements reduziert werden und dadurch das Verletzungsrisiko eines Fahrzeuginsassen auf dem Fahrzeugsitz wirkungsvoll verringert werden kann.

### Bezugszeichenliste

- 1: Sitzschienenpaar
- 2: Sitzunterschiene
- 3: Sitzoberschiene
- 3a: Oberseite
- 4: Anschlagelement
- 4a: Halteelement
- 5: Anschlagfläche
- 6: Sitzschwinge
- 7: Anschlagkörper
- 8: Kontaktfläche
- 9: Fahrzeugsitzgestells
- 12: Sitzunterschiene
- 13: Sitzoberschiene
- 14: Anschlagelement
- 14a: Halteelement
- 15: Anschlagfläche
- 16: Sitzschwinge
- 17: Anschlagkörper
- 18: Kontaktfläche
- 19: Fahrzeugsitzgestell
- 24: Anschlagelement
- 25: Anschlagfläche
- 26: Sitzschwinge
- 27: Anschlagkörper
- 28: Kontaktfläche
- 31: Aussparung
- 32: Kanten
- 33: Kanten
- 34: Zapfen
- 35: Deformationszone

## Patentansprüche

1. Vorrichtung zur gezielten Kontrolle und Reduzierung einer Rückverlagerung eines Fahrzeugsitzes bei einem Unfall, mit mindestens einem an einem Sitzschienenpaar (1) anordenbaren Anschlagelement (24), das eine Anschlagfläche (25) aufweist, die gegenüber einer Längsachse des Sitzschienenpaars (1) geneigt ist, und
mindestens einem an dem Fahrzeugsitz anordenbaren Anschlagkörper (27), mit einer in einer Normallage im Abstand von der Anschlagfläche (25) angeordneten Kontaktfläche (28), wobei das Anschlagelement (24) und der Anschlagkörper (27) derart ausgebildet und im montierten Zustand zueinander angeordnet sind, dass in einer bei einem Heckaufprall auf ein den Fahrzeugsitz aufweisendes Kraftfahrzeug auftretenden Crashlage die Anschlagfläche (25) des Anschlagelementes (24) und die Kontaktfläche (28) des Anschlagkörpers (27) in Kontakt kommen und dadurch die unfallbedingte Rückverlagerung des Fahrzeugsitzes zumindest vermindert wird, **dadurch gekennzeichnet, dass** das Anschlagelement (24) eine Deformationszone (35) in Form einer Aussparung aufweist, die bei Übergang aus der Normallage in die Crashlage eine gezielte Deformation des Anschlagelementes (24) bewirkt, wobei die Aussparung (35) mehr als die halbe Länge des Anschlagelements (24) parallel zur Verstellrichtung des Sitzschienenpaars (1) durchdringt, wobei die Querschnittsfläche der Aussparung (35) orthogonal zur Verstellrichtung des Sitzschienenpaares (1) bevorzugt rautenförmig ausgebildet ist und dass der Anschlagkörper (27) im Bereich der Kontaktfläche (28) eine lochartige Aussparung (31) und das Anschlagelement (24) einen aus der Anschlagfläche (25) hervorstehenden Zapfen (34) aufweisen, die derart ausgebildet und angeordnet sind, dass in der Crashlage der aus der Anschlagfläche (25) hervorstehende Zapfen (34) mit der lochartigen Aussparung (31) des Anschlagkörpers (27) im Bereich der Kontaktfläche (28) in Eingriff gelangt.

2. Vorrichtung nach Anspruch 1, **dadurch gekennzeichnet, dass** der Anschlagkörper (27) einstückig mit einem Bauteil eines Fahrzeugsitzgestells (9, 19) des Fahrzeugsitzes, bevorzugt einstückig durch Umbördelung einer Sitzschwinge (26) des Fahrzeugsitzes ausbildbar ist.

3. Vorrichtung nach Anspruch 1 oder 2, **dadurch gekennzeichnet, dass** das Anschlagelement (24) ein weiteres Halteelement (4a) aufweist.

4. Vorrichtung nach einem oder mehreren der vorhergehenden Ansprüche, **dadurch gekennzeichnet, dass** die Anschlagfläche (25) eben ausgebildet ist und/oder eine raue Oberflächenstruktur besitzt.

## Claims

1. Device for the targeted control and reduction of a shifting backwards of a vehicle seat in the event of an accident, with at least one stop element (24) which can be arranged in a seat rail pair (1) and has a stop surface (25) which is inclined in relation to a longitudinal axis of the seat rail pair (1), and with at least one stop body (27) which can be arranged on the vehicle seat, with a contact surface (28) which is arranged at a distance from the stop surface (25) in a normal position, wherein the stop element (24) and the stop body (27) are designed and arranged with respect to each other in the mounted state in such a manner that, in a crash position occurring in the event of a rear impact against a motor vehicle having the vehicle seat, the stop surface (25) of the stop element (24) and the contact surface (28) of the stop body (27) come into contact and the accident-induced shifting backwards of the vehicle seat is thereby at least reduced, **characterized in that** the stop element (24) has a deformation zone (35) in the form of a recess which, during the transition from the normal position into the crash position, brings about a specific deformation of the stop element (24), wherein the recess (35) penetrates more than half of the length of the stop element (24) parallel to the adjustment direction of the seat rail pair (1), wherein the cross-sectional area of the recess (35) orthogonally with respect to the adjustment direction of the seat rail pair (1) is preferably of diamond-shaped design, and **in that**, in the region of contact surface (28), the stop body (27) has a hole-like recess (31) and the stop element (24) has a pin (34) which protrudes from the stop surface (25), said recess and pin being designed and arranged in such a manner that, in the crash position, the pin (34) protruding from the stop surface (25) enters into engagement with the hole-like recess (31) of the stop body (27) in the region of the contact surface (28).

2. Device according to Claim 1, **characterized in that** the stop body (27) can be formed integrally with a component of a vehicle seat frame (9, 19) of the vehicle seat, preferably integrally by crimping a seat rocker (26) of the vehicle seat.

3. Device according to Claim 1 or 2, **characterized in that** the stop element (24) has a further holding element (4a).

4. Device according to one or more of the preceding claims, **characterized in that** the stop surface (25) is of flat design and/or has a rough surface structure.

## Revendications

1. Dispositif pour le contrôle et la réduction spécifiques d'un déplacement vers l'arrière d'un siège de véhicule en cas d'accident, comprenant au moins un élément de butée (24) pouvant être disposé sur une paire de rails de siège (1), qui présente une surface de butée (25) qui est inclinée par rapport à un axe longitudinal de la paire de rails de siège (1), et
au moins un corps de butée (27) pouvant être disposé sur le siège de véhicule, avec une surface de contact (28) disposée dans une position normale à distance de la surface de butée (25), l'élément de butée (24) et le corps de butée (27) étant réalisés et étant disposés l'un par rapport à l'autre dans l'état monté de telle sorte que dans une position de collision se produisant lors d'une collision par l'arrière avec un véhicule présentant le siège de véhicule, la surface de butée (25) de l'élément de butée (24) et la surface de contact (28) du corps de butée (27) viennent en contact et que de ce fait le déplacement vers l'arrière du siège de véhicule provoqué par l'accident soit au moins évité,
**caractérisé en ce que**
l'élément de butée (24) présente une zone de déformation (35) sous la forme d'un évidement, qui, lors du passage de la position normale dans la position de collision, provoque une déformation spécifique de l'élément de butée (24), l'évidement (35) traversant plus de la moitié de la longueur de l'élément de butée (24) parallèlement la direction de déplacement de la paire de rails de siège (1), la surface en section transversale de l'évidement (35) étant réalisée perpendiculairement à la direction de déplacement de la paire de rails de siège (1) de préférence en forme de losange et **en ce que** le corps de butée (27), dans la région de la surface de contact (28), présente un évidement de type trou (31) et l'élément de butée (24) présente un tourillon (34) faisant saillie hors de la surface de butée (25), lesquels sont réalisés et disposés de telle sorte que dans la position de collision, le tourillon (34) faisant saillie hors de la surface de butée (25) parvienne en prise avec l'évidement de type trou (31) du corps de butée (27) dans la région de la surface de contact (28).

2. Dispositif selon la revendication 1, **caractérisé en ce que** le corps de butée (27) peut être réalisé d'une seule pièce avec un composant d'un châssis de siège de véhicule (9, 19) du siège de véhicule, de préférence d'une seule pièce par rabattement d'un bras oscillant de siège (26) du siège de véhicule.

3. Dispositif selon la revendication 1 ou 2, **caractérisé en ce que** l'élément de butée (24) présente un élément de retenue supplémentaire (4a) .

4. Dispositif selon l'une quelconque ou plusieurs des revendications précédentes, **caractérisé en ce que** la surface de butée (25) est réalisée sous forme plane et/ou possède une structure de surface rugueuse.
